# EUROPEAN PATENT APPLICATION

(11) **EP 4 554 292 A1**
(43) Date of publication of application: **14.05.2025**
(21) Application number: 23834946.8
(22) Date of filing: 07.07.2023
(51) Int. Cl.: H04W 56/00

(54) **SYNCHRONOUS TRANSMISSION GROUP DETERMINATION METHOD, TERMINAL AND CORE NETWORK ELEMENT**

(30) Priority: 08.07.2022 CN 202210806276
(71) Applicant: Datang Mobile Communications Equipment Co., Ltd., Beijing 100085 (CN)
(72) Inventor: SUN, Wanfei, Beijing 100085 (CN)
(74) Representative: Studio Torta S.p.A.
(86) International application number: PCT/CN2023/106307
(87) International publication number: WO 2024/008181

(57) **Abstract**

A method for determining a synchronous transmission group, a terminal and a core network element are provided, which relate to the field of communication technology. The method includes: receiving, by a first terminal, first indication information, wherein the first indication information is used to indicate a first synchronous transmission group to which the first terminal belongs; wherein multiple terminals corresponding to the first synchronous transmission group synchronously receive data and/or synchronously complete processing of the data.

## Description

### CROSS-REFERENCE TO RELATED APPLICATION

The present disclosure claims a priority to the Chinese patent application No. 202210806276.3 filed in China on July 8, 2022, a disclosure of which is incorporated herein by reference in its entirety.

### TECHNICAL FIELD

The present disclosure relates to the field of communication technology, and in particular, to a method for determining a synchronous transmission group, a terminal and a core network element.

### BACKGROUND

In a mobile communication network, a wide area serves a large number of users. Different users are in different network environments, resulting in different delays. When precise synchronous of data reception is necessary for multiple users over a wide area, it is necessary to determine the data synchronous reception time so that multiple users can receive data simultaneously with precision.

Quality of Service (QoS) related technologies define the delay of the data path and guarantee transmission. A deterministic network further achieves almost deterministic transmission of data within a small jitter range through technical means on a transmission path. However, the above technologies are all used to guarantee the transmission delay of a single User Equipment (UE). For a scenario where precise synchronous is required on a large scale over a wide area, multiple UEs/service flows are required to receive and process data simultaneously. The current deterministic transmission of the single UE cannot be applied to processing of simultaneous transmission of multiple terminals over a wide area.

### SUMMARY

The present disclosure provides a method for determining a synchronous transmission group, a terminal and a core network element, which solves a problem that the processing of simultaneous transmission of multiple user devices over a wide area cannot be realized currently.

The embodiment of the present disclosure provides a method for determining a synchronous transmission group, including:
receiving, by a first terminal, first indication information, wherein the first indication information is used to indicate a first synchronous transmission group to which the first terminal belongs;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, before receiving, by the first terminal, the first indication information, the method further includes:
sending, by the first terminal, a first request message, wherein the first request message is used to request a first core network element to determine the first synchronous transmission group.

Optionally, the first request message carries second indication information;
wherein the second indication information is used to indicate a second synchronous transmission group and/or a second terminal that performs synchronous transmission; the first synchronous transmission group is determined by the first core network element based on the second indication information.

Optionally, the second indication information includes at least one of the followings:
identification information of the second synchronous transmission group;
level information of the second synchronous transmission group; or
identification information of the second terminal.

Optionally, the first terminal is pre-configured with a list that includes multiple synchronous transmission groups.

Optionally, the first request message carries transmission delay information and/or processing capability information of the first terminal.

Optionally, after receiving, by the first terminal, the first indication information, the method further includes:
sending, by the first terminal, a first response message, wherein the first response message carries confirmation information of the first synchronous transmission group.

The embodiments of the present disclosure further provide a method for determining a synchronous transmission group, including:
receiving, by a first core network element, a request message;
determining, by the first core network element, a first synchronous transmission group based on the request message;
sending, by the first core network element, first indication information, wherein the first indication information is used to indicate the first synchronous transmission group;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, receiving, by the first core network element, the request message, including:
receiving, by the first core network element, a first request message, wherein the first request message is used for a first terminal to request the first core network element to determine the first synchronous transmission group to which the first terminal belongs; or
receiving, by the first core network element, a second request message sent by a network function entity, wherein the second request message is used to request the first core network element to determine the first synchronous transmission group.

Optionally, the first request message and/or the second request message carries second indication information; wherein the second indication information is used to indicate a second synchronous transmission group and/or a second terminal that performs synchronous transmission;
determining, by the first core network element, the first synchronous transmission group based on the request message, including:
determining, by the first core network element, the first synchronous transmission group based on the second indication information.

Optionally, the second indication information includes at least one of the followings:
identification information of the second synchronous transmission group;
level information of the second synchronous transmission group; or
identification information of the second terminal.

Optionally, the first request message carries processing capability information of the first terminal and/or transmission delay information, and/or the second request message carries processing capability information of the first terminal and/or transmission delay information;
after determining, by the first core network element, the first synchronous transmission group based on the request message, the method further includes:
establishing, by the first core network element, a synchronous transmission policy corresponding to the first synchronous transmission group based on the transmission delay information and/or the processing capability information; or
sending, by the first core network element, a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

Optionally, the first core network element or a third core network element is pre-configured with a list that includes multiple synchronous transmission groups supported by the terminal, and/or synchronous transmission capability information supported by the network;
determining, by the first core network element, the first synchronous transmission group based on the request message, including:
determining, by the first core network element, the first synchronous transmission group based on the list and the request message.

Optionally, after sending, by the first core network element, the first indication information, the method further includes:
receiving, by the first core network element, a first response message, wherein the first response message carries confirmation information of the terminal confirming the first synchronous transmission group.

The embodiments of the present disclosure further provide a terminal, the terminal being a first terminal, and including a memory, a transceiver, and a processor;
wherein the memory is configured to store a computer program; the transceiver is configured to receive and send data under the control of the processor; the processor is configured to read the computer program in the memory and perform the following operations:
receiving first indication information, wherein the first indication information is used to indicate a first synchronous transmission group to which the first terminal belongs;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the processor is configured to read the computer program in the memory and perform the following operations:
sending a first request message, wherein the first request message is used to request a first core network element to determine the first synchronous transmission group.

Optionally, the first request message carries second indication information;
wherein the second indication information is used to indicate a second synchronous transmission group and/or a second terminal that performs synchronous transmission; the first synchronous transmission group is determined by the first core network element based on the second indication information.

Optionally, the second indication information includes at least one of the followings:
identification information of the second synchronous transmission group;
level information of the second synchronous transmission group; or
identification information of the second terminal.

Optionally, the first terminal is pre-configured with a list that includes multiple synchronous transmission groups.

Optionally, the first request message carries transmission delay information and/or processing capability information of the first terminal.

Optionally, the processor is configured to read the computer program in the memory and perform the following operations:
sending a first response message, wherein the first response message carries confirmation information of the first synchronous transmission group.

The embodiment of the present disclosure further provides a terminal, the terminal being a first terminal, including:
a receiving unit, configured to receive first indication information, wherein the first indication information is used to indicate a first synchronous transmission group to which the first terminal belongs;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the terminal further includes:
a first sending unit, configured to send a first request message, the first request message being used to request a first core network element to determine the first synchronous transmission group.

Optionally, the first request message carries second indication information;
wherein the second indication information is used to indicate a second synchronous transmission group and/or a second terminal that performs synchronous transmission; the first synchronous transmission group is determined by the first core network element based on the second indication information.

Optionally, the second indication information includes at least one of the followings:
identification information of the second synchronous transmission group;
level information of the second synchronous transmission group; or
identification information of the second terminal.

Optionally, the first terminal is pre-configured with a list that includes multiple synchronous transmission groups.

Optionally, the first request message carries transmission delay information and/or processing capability information of the first terminal.

The embodiments of the present disclosure further provide a core network element, the core network element being a first core network element, and including a memory, a transceiver, and a processor;
wherein the memory is configured to store a computer program; the transceiver is configured to receive and send data under the control of the processor; the processor is configured to read the computer program in the memory and perform the following operations:
receiving a request message;
determining a first synchronous transmission group based on the request message;
sending a first indication information, the first indication information is used to indicate the first synchronous transmission group;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the processor is configured to read the computer program in the memory and perform the following operations:
receiving a first request message, the first request message is used for a first terminal to request the first core network element to determine the first synchronous transmission group to which the first terminal belongs; or
receiving a second request message sent by a network function entity, the second request message is used to request the first core network element to determine the first synchronous transmission group.

Optionally, the first request message and/or the second request message carries second indication information; wherein the second indication information is used to indicate a second synchronous transmission group and/or a second terminal that performs synchronous transmission;
the processor is configured to read the computer program in the memory and perform the following operation:
determining the first synchronous transmission group based on the second indication information.

Optionally, the second indication information includes at least one of the followings:
identification information of the second synchronous transmission group;
level information of the second synchronous transmission group; or
identification information of the second terminal.

Optionally, the first request message carries processing capability information of the first terminal and/or transmission delay information, and/or the second request message carries processing capability information of the first terminal and/or transmission delay information;
the processor is configured to read the computer program in the memory and perform the following operation:
establishing a synchronous transmission policy corresponding to the first synchronous transmission group based on the transmission delay information and/or the processing capability information; or
sending a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

Optionally, the first core network element or the third core network element is pre-configured with a list that includes multiple synchronous transmission groups supported by the terminal, and/or synchronous transmission capability information supported by the network;
the processor is configured to read the computer program in the memory and perform the following operation:
determining the first synchronous transmission group based on the list and the request message.

Optionally, the processor is configured to read the computer program in the memory and perform the following operation:
receiving a first response message, wherein the first response message carries confirmation information of the terminal confirming the first synchronous transmission group.

The embodiments of the present disclosure further provide a core network element, the core network element being a first core network element, and including:
a first receiving unit, configured to receive a request message;
a processing unit, configured to determine a first synchronous transmission group based on the request message;
a first sending unit, configured to send first indication information, the first indication information being used to indicate the first synchronous transmission group;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the first receiving unit is further configured to:
receive a first request message, the first request message being used for a first terminal to request the first core network element to determine the first synchronous transmission group to which the first terminal belongs; or
receive a second request message sent by a network function entity, the second request message being used to request the first core network element to determine the first synchronous transmission group.

Optionally, the first request message and/or the second request message carries second indication information; wherein the second indication information is used to indicate a second synchronous transmission group and/or a second terminal that performs synchronous transmission;
the processing unit is further configured to:
determine the first synchronous transmission group based on the second indication information.

Optionally, the second indication information includes at least one of the followings:
identification information of the second synchronous transmission group;
level information of the second synchronous transmission group; or
identification information of the second terminal.

Optionally, the first request message carries processing capability information of the first terminal and/or transmission delay information, and/or the second request message carries processing capability information of the first terminal and/or transmission delay information;
the core network element further includes:
a first establishing unit, configured to establish a synchronous transmission policy corresponding to the first synchronous transmission group based on the transmission delay information and/or the processing capability information; or
a second sending unit, configured to send a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

Optionally, the first core network element or the third core network element is pre-configured with a list that includes multiple synchronous transmission groups supported by the terminal, and/or synchronous transmission capability information supported by the network;
the processing unit is further configured to:
determine the first synchronous transmission group based on the list and the request message.

The embodiments of the present disclosure further provide a processor-readable storage medium storing a computer program, wherein the computer program is used to cause a processor to execute the steps of the method for determining a synchronous transmission group at the terminal side, or the computer program is used to cause a processor to execute the steps of the method for determining a synchronous transmission group at the core network element side.

The beneficial effect of the above technical solution of the present disclosure is that the terminal receives the first indication information for indicating the first synchronous transmission group to which the first terminal belongs, so as to facilitate downlink data reception based on the first synchronous transmission group, thereby ensuring that the multiple terminals corresponding to the first synchronous transmission group may synchronously receive data and/or synchronously complete the processing of the data during downlink transmission.

### BRIEF DESCRIPTION OF THE DRAWINGS

Fig. 1 shows a flow chart of a method for determining a synchronous transmission group at the terminal side according to an embodiment of the present disclosure;
Fig. 2 shows a flow chart of the method for determining a synchronous transmission group at the core network element side according to an embodiment of the present disclosure;
Fig. 3 shows an interaction diagram of the method for determining a synchronous transmission group between the terminal and the core network according to an embodiment of the present disclosure;
Fig. 4 shows another interaction diagram of the method for determining a synchronous transmission group between the terminal and the core network according to an embodiment of the present disclosure;
Fig. 5 shows yet another interaction diagram of the method for determining a synchronous transmission group between the terminal and the core network according to an embodiment of the present disclosure;
Fig. 6 shows still yet another interaction diagram of the method for determining a synchronous transmission group between the terminal and the core network according to an embodiment of the present disclosure;
Fig. 7 shows still yet another interaction diagram of the method for determining a synchronous transmission group between the terminal and the core network according to an embodiment of the present disclosure;
Fig. 8 shows a structural block diagram at the terminal side according to an embodiment of the present disclosure;
Fig. 9 shows another structural block diagram at the terminal side according to an embodiment of the present disclosure;
Fig. 10 shows a structural block diagram at the core network side according to an embodiment of the present disclosure;
Fig. 11 shows another structural block diagram at the core network side according to an embodiment of the present disclosure.

### DETAILED DESCRIPTION

In order to make the technical problems, technical solutions and advantages addressed by the present disclosure clearer, a detailed description will be given below with reference to the accompanying drawings and specific embodiments. In the following description, specific details, such as specific configurations and components, are provided solely to assist in a comprehensive understanding of embodiments of the present disclosure. Accordingly, it will be apparent to those skilled in the art that various changes and modifications can be made to the embodiments described herein without departing from the scope and spirit of the present disclosure. Additionally, descriptions of known functions and constructions are omitted for clarity and conciseness.

It will be understood that reference throughout this specification to "one embodiment" or "an embodiment" means that a particular feature, structure, or characteristic associated with the embodiment is included in at least one embodiment of the present disclosure. Thus, the appearances of "in one embodiment" or "in an embodiment" in various places throughout this specification are not necessarily referring to the same embodiment. Furthermore, the particular features, structures or characteristics can be combined in any suitable manner in one or more embodiments.

In various embodiments of the present disclosure, it should be understood that the sequence numbers of the following processes do not mean the order of execution. The execution order of each process should be determined by its functions and internal logic, and the sequence numbers should not constitute any limitations on the implementations of the embodiments of the present disclosure.

Additionally, the terms "system" and "network" are often used interchangeably herein.

The technical solutions provided by the embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO). According to the configuration and quantity of antenna combinations, the MIMO transmission may be two Dimensional-MIMO (2D-MIMO), three Dimensional-MIMO (3D-MIMO), Full Dimensional-MIMO (FD-MIMO) or massive-MIMO, and may be diversity transmission, precoded transmission, beam forming transmission, or the like.

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without creative efforts shall fall within the scope of the present disclosure.

The following is an introduction to certain aspects related to the field involved in the embodiments of the present disclosure:
Standardized 5G QOS Identifier (5QI)

In a 5G network, based on 5QI requirements, the transmission delay of session data is guaranteed. The following Table 1 shows a mapping table (part) of standardized 5QI to QoS requirements, where the fourth column indicates the delay requirements.

**Table 1: Mapping of Standardized 5QI to QoS Characteristics**

| 5QI Value | Resource Type | Default Priority | Packet Delay Budget (Note 3) | Packet Error Rate | Default Maximum Data Burst (Note 2) | Default Average Window | Exemplary Service |
|---|---|---|---|---|---|---|---|
| 1 | GBR | 20 | 100 ms (Notes 11, 13) | 10-2 | N/A | 2000 ms | Session Voice |
| 2 | (NOTE 1) | 40 | 150 ms (Notes 11, 13) | 10-3 | N/A | 2000 ms | Session Video (Live) |
| 3 | | 30 | 50 ms (Notes 11, 13) | 10-3 | N/A | 2000 ms | Real-time Gaming, Vehicle-to-Everything (V2X) messages (see TS 23.287 [121]) Distribution-Medium Voltage, Process Automation Monitoring |
| 4 | | 50 | 300 ms (Notes 11, 13) | 10-6 | N/A | 2000 ms | Non-session Video (Buffered Streaming) |
| 65 (Notes 9, 12) | | 7 | 75 ms (Notes 7, 8) | 10-2 | N/A | 2000 ms | Mission Critical User Plane Push To Talk Voice (e.g., Mission Critical Push To Talk, MCPTT) |
| 66 (Note 12) | | 20 | 100 ms (Notes 10, 13) | 10-2 | N/A | 2000 ms | Non-critical Mission User Plane Push To Talk Voice |
| 67 (Note 12) | | 15 | 100 ms (Notes 10, 13) | 10-3 | N/A | 2000 ms | Critical Mission Video User Plane |

### 2. Deterministic network

Through technical means, data is guaranteed to be deterministically transmitted on the transmission path with a minimal jitter range, and there is currently no relevant solution for the technology of precise synchronous reception of data by multiple terminals over a wide area.

The embodiments of the present disclosure provide a method for determining a synchronous transmission group, a terminal and a core network element to solve the problem that the simultaneous transmission for multiple terminals over a wide area cannot be achieved currently. The method and the terminal (or the core network element) are based on a same inventive concept. Since the principles of the method and terminal (or core network element) for solving the problem are similar, the implementations of the method and the terminal (or the core network element) can refer to each other, and repeated descriptions will not be detailed herein.

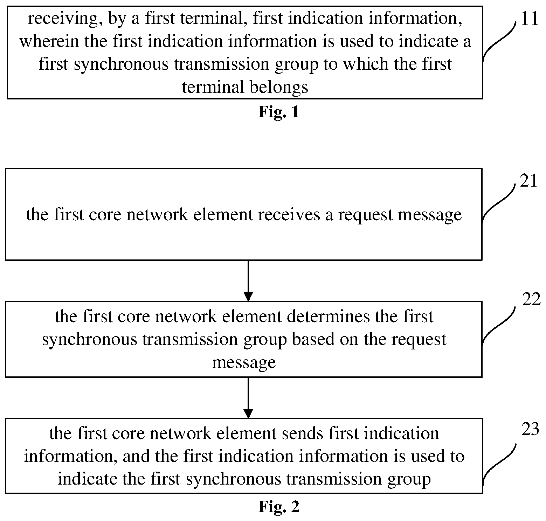

As shown in Fig. 1, an embodiment of the present disclosure provides a method for determining a synchronous transmission group, including the following steps.

Step 11: a first terminal receives first indication information, wherein the first indication information is used to indicate a first synchronous transmission group to which the first terminal belongs.

Multiple terminals corresponding to the first synchronous transmission group synchronously receive data and/or synchronously complete processing of the data.

For example, the first terminal may receive the first indication information in the case that an establishment of a synchronous transmission terminal group is initiated by the first terminal; or, the first terminal may receive the first indication information in the case that the establishment of a synchronous transmission terminal group is initiated by a network (e.g., a network function entity like a network management plane function or a Policy Control Function (PCF) network element). A process of the first terminal receiving the first indication information may include: a first core network element sends the first indication information to a base station, and the base station sends the first indication information to the first terminal, enabling the first terminal to receive the first indication information. The first core network element may be an Access and Mobility Management Function (AMF) network element, or a Session Management Function (SMF) network element, or a newly added core network element, etc.

Furthermore, in the case that the first terminal receives the first indication information for indicating the first synchronous transmission group to which the first terminal belongs, it can receive downlink data based on the first synchronous transmission group. For example, the key to synchronously receiving data and/or synchronously completing the processing of the data by multiple terminals in a wide area is to determine the time for synchronous reception of multiple terminals based on the network conditions of the multiple terminals and the differences in terminal processing capabilities, and to differentiate the transmission delays of different paths based on the determined synchronous reception time, so that data can be transmitted to the terminals simultaneously. Therefore, the first core network element can configure a corresponding transmission policy based on the multiple terminals corresponding to the first synchronous transmission group to ensure that the multiple terminals corresponding to the first synchronous transmission group can synchronously receive data and/or synchronously complete the processing of the data during downlink transmission, thereby realizing synchronous reception of data and/or synchronous completion of the processing of the data by multiple terminals.

In the above solution, the terminal receives the first indication information for indicating the first synchronous transmission group to which the first terminal belongs, so as to facilitate downlink data reception based on the first synchronous transmission group, thereby ensuring that the multiple terminals corresponding to the first synchronous transmission group can synchronously receive data and/or synchronously complete the processing of the data during downlink transmission.

Optionally, the first indication information includes at least one of the followings:
identification information of the first synchronous transmission group; or
level information of the first synchronous transmission group.

For example, a list that includes multiple synchronous transmission groups is pre-configured. For example, the list includes 8 synchronous transmission groups, and the 8 synchronous transmission groups can be numbered from 0 to 7, and the identification information of different synchronous transmission groups can be determined based on the number. For another example: for different synchronous transmission groups, a level can be determined based on a predetermined rule, and the identification information of different synchronous transmission groups can be determined based on the level, etc., and the embodiments of the present disclosure are not limited thereto.

Optionally, before receiving, by the first terminal, the first indication information, the method further includes:
sending, by the first terminal, a first request message, wherein the first request message is used to request a first core network element to determine the first synchronous transmission group.

Specifically, the first terminal can actively initiate a request to establish a synchronous transmission group; for example, the first terminal sends a first request message to a base station, and the base station directly or indirectly forwards the first request message to the first core network element; the first core network element can determine the first synchronous transmission group based on the first request message, and feed back an indication message to the first terminal, such as the indication message carrying the first indication information.

For example, the first terminal may initiate a request to establish a synchronous transmission group based on an implementation, and the request may only request the first terminal to join a certain synchronous transmission group without specifying which synchronous transmission group to join.

Specifically, the core network side may determine the synchronous transmission group based on a predetermined rule (e.g., the terminals that initiate requests within a certain time period can be considered as a synchronous transmission group); or, it may determine the synchronous transmission group that the first terminal can join based on a terminal capability of the first terminal (e.g., establishing a synchronous transmission group based on the terminal capabilities of multiple terminals, etc.); or, it may determine the synchronous transmission group that includes the first terminal based on a pre-configured list that includes multiple synchronous transmission groups; or, in the case that none of the synchronous transmission groups in the pre-configured list includes the first terminal, based on a predetermined rule or the terminal capability, it may add the synchronous transmission group including the first terminal to the list, or add the first terminal to an existing synchronous transmission group, etc., and the embodiments of the present disclosure are not limited thereto.

Optionally, the first request message carries second indication information; wherein the second indication information is used to indicate a second synchronous transmission group and/or a second terminal that performs synchronous transmission; the first synchronous transmission group is determined by the first core network element based on the second indication information.

Optionally, the second indication information includes at least one of the followings:
identification information of the second synchronous transmission group;
level information of the second synchronous transmission group; or
identification information of the second terminal.

For another example, the first terminal may request to join a same synchronous transmission group as the second terminal. At this time, the first terminal may carry the second indication information for indicating the second terminal in the first request message. For example, the second indication information may be the identification information of the second terminal, such as the identification information may be a Subscription Permanent Identifier (SUPI), a Subscription Concealed Identifier (SUCI), etc., which is used for the core network side to identify the second terminal that performs synchronous transmission requested by the first terminal. The second terminal may be one or more terminals.

Specifically, the core network side may add the first terminal and the second terminal to the same synchronous transmission group based on a predetermined rule (such as an existing synchronous transmission group determined by the predetermined rule); or, it may determine the synchronous transmission group that the first terminal and the second terminal can join or establish a new synchronous transmission group based on the terminal capabilities of the first terminal and the second terminal; or, it may determine that the synchronous transmission group including the first terminal/second terminal also includes the second terminal/first terminal based on a pre-configured list that includes multiple synchronous transmission groups, and then determine it as a first synchronous transmission group; or, in the case that none of the synchronous transmission groups in the pre-configured list includes the first terminal and the second terminal (or includes only one of them), based on the predetermined rule or terminal capabilities, it may also add the synchronous transmission group that includes the first terminal and the second terminal to the list, or add the first terminal/second terminal to the existing synchronous transmission group, etc., and the embodiments of the present disclosure are not limited thereto.

Optionally, the first terminal can be pre-configured with a list that includes multiple synchronous transmission groups.

For another example, in the case that the first terminal is pre-configured with a list that includes multiple synchronous transmission groups, the first terminal may carry in the first request message the second indication information for indicating the synchronous terminal group it wants to join, such as the second indication information may be identification information of the second synchronous transmission group and/or level information of the second synchronous transmission group. Correspondingly, the core network side may also be pre-configured with a list that includes multiple synchronous transmission groups, so that the first synchronous transmission group can be determined based on the second indication information.

Specifically, the core network side can make a decision based on the second indication information to determine whether the first terminal meets a condition of the second synchronous transmission group it requested. If it does not meet the condition, the first synchronous transmission group can be determined based on a predetermined rule or a terminal capability (as recited in the above embodiments, which will not be repeated here), and the first indication information used to indicate the first synchronous transmission group can be fed back; if it meets the condition, the first indication information used to indicate the first synchronous transmission group can be fed back (wherein the first synchronous transmission group is the same as the second synchronous transmission group), or only a confirmation indication can be fed back to notify the first terminal to confirm the second synchronous transmission group it requested, etc., and the embodiments of the present disclosure are not limited thereto.

It should be noted that, in the case that the first terminal is pre-configured with a list that includes multiple synchronous transmission groups, the first terminal may not carry in the first request message the second indication information used to indicate the synchronous terminal group it wants to join. For example, when there is no synchronous terminal group that meets the condition in the list of pre-configured synchronous transmission groups, the first terminal may initiate a request to establish a synchronous transmission group, which may only request the first terminal to join a certain synchronous transmission group without limiting which synchronous transmission group to join. Optionally, after receiving the first indication information, the first terminal may update the corresponding synchronous transmission group in the list of synchronous transmission groups.

For another example, the first terminal may carry the second indication information for indicating the synchronous transmission group to be joined and the second terminal that performs synchronous transmission in the first request message, so as to request the second terminal to join the synchronous transmission group, such as the second indication information may be the identification information of the second synchronous transmission group and/or the level information of the second synchronous transmission group, and the identification information of the second terminal. Specifically, the core network side determines the first synchronous transmission group based on the second indication information, which can refer to the above embodiments or their combinations, and will not be elaborated further herein.

Optionally, the first request message carries transmission delay information and/or processing capability information of the first terminal.

For example, the processing capability information may be a processor model (CPU/GPU), a memory model, or information measuring processing capability such as a main frequency/number of cores/a memory size, etc. The transmission delay information may include but is not limited to: terminal processing delay, air interface delay, etc.; the embodiments of the present disclosure are not limited thereto.

In the embodiments, when the first terminal initiates a request to establish a synchronous transmission group, it can carry transmission delay information and/or processing capability information of the first terminal, so that for the core network side, it can determine the synchronous transmission policy corresponding to the first synchronous transmission group when determining the first synchronous transmission group to which the first terminal belongs based on the request to establish a synchronous transmission group; wherein the synchronous transmission policy is a policy at the core network side that enables multiple terminals corresponding to the synchronous transmission group to synchronously receive data and/or synchronously complete the processing of the data.

Optionally, after receiving, by a first terminal, first indication information, the method also includes:
sending, by the first terminal, a first response message, and the first response message carries confirmation information of the first synchronous transmission group.

For example, the first terminal sends a first response message to the base station, and the base station directly or indirectly forwards the first response message to the first core network element to notify the first core network element that the first indication information has been received and/or the first synchronous transmission group has been confirmed.

The terminal involved in the embodiments of the present disclosure may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, a portable, pocket-sized, handheld, computer-built-in or vehicle-mounted mobile device, which exchanges audio and/or data with a radio access network, e.g., a Personal Communication Service (PCS) phone, a cordless phone, a Session Initiated Protocol (SIP) phone, a Wireless Local Loop (WLL) station, a Personal Digital Assistant (PDA) and another device. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present disclosure.

As shown in Fig. 2, the embodiment of the present disclosure provides a method for determining a synchronous transmission group, including the following steps.

Step 21: the first core network element receives a request message.

The request message is used to request an establishment of a synchronous transmission group to which the first terminal belongs. Specifically, the request to establish a synchronous transmission group may be initiated by the first terminal, or by the network side (e.g., a network management plane function or a network function entity such as a PCF network element).

Optionally, the first core network element may be an AMF element, or an SMF element, or a newly added core network element, etc.

Step 22: the first core network element determines the first synchronous transmission group based on the request message.

For example, the first core network element may determine the first synchronous transmission group to which the first terminal belongs based on a synchronous transmission group establishment request initiated by a network function entity or a first terminal, or a predetermined rule, or a terminal capability, or a list of pre-configured synchronous transmission groups, etc.

Step 23: the first core network element sends first indication information, and the first indication information is used to indicate the first synchronous transmission group.

Multiple terminals corresponding to the first synchronous transmission group synchronously receive data and/or synchronously complete processing of the data.

For example, a process of sending the first indication information by the first core network element may include: the first core network element sends the first indication information to the base station, and the base station sends the first indication information to the first terminal, allowing the first terminal to receive the first indication information.

Furthermore, in the case that the first terminal receives the first indication information for indicating the first synchronous transmission group to which the first terminal belongs, it can receive downlink data based on the first synchronous transmission group. For example, the key to synchronously receiving data and/or synchronously completing the processing of the data by multiple terminals in a wide area is to determine the time for synchronous reception of multiple terminals based on the network conditions of the multiple terminals and the differences in terminal processing capabilities, and to differentiate the transmission delays of different paths based on the determined synchronous reception time, so that data can be transmitted to the terminals simultaneously. Therefore, the first core network element can configure a corresponding transmission policy based on the multiple terminals corresponding to the first synchronous transmission group to ensure that the multiple terminals corresponding to the first synchronous transmission group can synchronously receive data and/or synchronously complete the processing of the data during downlink transmission, thereby realizing synchronous reception of data and/or synchronous completion of the processing of the data by multiple terminals.

In the above solution, the first core network element receives a request message for establishing a synchronous transmission group to which the first terminal belongs, determines the first synchronous transmission group to which the first terminal belongs, and sends first indication information for indicating the first synchronous transmission group. As a result, the terminal receives the first indication information for indicating the first synchronous transmission group to which the first terminal belongs, and the first core network element can send downlink data based on the first synchronous transmission group, thereby ensuring that the multiple terminals corresponding to the first synchronous transmission group can synchronously receive data and/or synchronously complete the processing of the data during downlink transmission.

Optionally, the first indication information includes at least one of the followings:
identification information of the first synchronous transmission group; or
level information of the first synchronous transmission group.

For example, a list that includes multiple synchronous transmission groups is pre-configured. For example, the list includes 8 synchronous transmission groups, and the 8 synchronous transmission groups can be numbered from 0 to 7, and the identification information of different synchronous transmission groups can be determined based on the number. For another example: for different synchronous transmission groups, a level can be determined based on a predetermined rule, and the identification information of different synchronous transmission groups can be determined based on the level, etc., and the embodiments of the present disclosure are not limited thereto.

Optionally, receiving, by the first core network element, the request message, including:
receiving, by the first core network element, a first request message, wherein the first request message is used for a first terminal to request the first core network element to determine the first synchronous transmission group to which the first terminal belongs; or
the first core network element receives a first request message, and the first request message is used by the first terminal to request the first core network element to determine the first synchronous transmission group where the first terminal is located; or
receiving, by the first core network element, a second request message sent by a network function entity, wherein the second request message is used to request the first core network element to determine the first synchronous transmission group.

For example, in the case that the request to establish a synchronous transmission group is initiated by the first terminal, a process of the first core network element receiving the first request message may include: the first terminal sends a first request message to the base station, and the base station directly or indirectly forwards the first request message to the first core network element, so that the first core network element can receive the first request message of the first terminal.

For example, the first terminal may initiate a request to establish a synchronous transmission group based on an implementation, and the request may only request the first terminal to join a certain synchronous transmission group without specifying which synchronous transmission group to join. Similarly, the network function entity initiates a request to establish a synchronous transmission group, and may also only request the first terminal to join a certain synchronous transmission group without specifying which synchronous transmission group to join. Here, the first terminal may be one or more terminals, that is, the network function entity may request one or more terminals to join a same transmission group or different synchronous transmission groups.

Specifically, the core network side may determine the synchronous transmission group based on a predetermined rule (e.g., terminals initiating requests within a certain time period can be considered as a synchronous transmission group); or, it may determine the synchronous transmission group that the first terminal can join based on a terminal capability of the first terminal (e.g., establishing a synchronous transmission group based on the terminal capabilities of multiple terminals, etc.); or, it may determine the synchronous transmission group that includes the first terminal based on a pre-configured list that includes multiple synchronous transmission groups; or, in the case that none of the synchronous transmission groups in the pre-configured list includes the first terminal, based on a predetermined rule or the terminal capability, it may add the synchronous transmission group including the first terminal to the list, or add the first terminal to an existing synchronous transmission group, etc., and the embodiments of the present disclosure are not limited thereto.

Optionally, the first request message and/or the second request message carries second indication information; wherein the second indication information is used to indicate the second synchronous transmission group and/or the second terminal that performs synchronous transmission;
the first core network element determines the first synchronous transmission group based on the request message, including:
the first core network element determines the first synchronous transmission group based on the second indication information.

Optionally, the second indication information includes at least one of the followings:
identification information of the second synchronous transmission group;
level information of the second synchronous transmission group; or
identification information of the second terminal.

For another example, the first terminal or the network function entity may request the first terminal and the second terminal to join the same synchronous transmission group. At this time, the first terminal or the network function entity may carry the second indication information for indicating the second terminal in the first request message. For example, the second indication information may be the identification information of the second terminal, such as the identification information may be the SUPI, the SUCI, etc., which is used for the core network side to identify the first terminal or the network function entity to request the second terminal to synchronize transmission with the first terminal. The second terminal may be one or more terminals.

Specifically, the core network side may add the first terminal and the second terminal to the same synchronous transmission group based on a predetermined rule (such as an existing synchronous transmission group determined by the predetermined rule); or, it may determine the synchronous transmission group that the first terminal and the second terminal can join or establish a new synchronous transmission group based on the terminal capabilities of the first terminal and the second terminal; or, it may determine that the synchronous transmission group including the first terminal/second terminal also includes the second terminal/first terminal based on a pre-configured list that includes multiple synchronous transmission groups, and then determine it as the first synchronous transmission group; or, in the case that none of the synchronous transmission groups in the pre-configured list includes the first terminal and the second terminal (or includes only one of them), based on the predetermined rule or terminal capabilities, it may also add the synchronous transmission group that includes the first terminal and the second terminal to the list, or add the first terminal/second terminal to the existing synchronous transmission group, etc., and the embodiments of the present disclosure are not limited thereto.

For another example, the first terminal or the network function entity may carry in the first request message the second indication information for indicating the synchronous terminal group it wants to join, such as the second indication information may be identification information of the second synchronous transmission group and/or level information of the second synchronous transmission group. Correspondingly, the core network side may also be pre-configured with a list that includes multiple synchronous transmission groups, so that the first synchronous transmission group can be determined based on the second indication information.

Specifically, the core network side can make a decision based on the second indication information to determine whether the first terminal meets a condition of the second synchronous transmission group it requested. If it does not meet the condition, the first synchronous transmission group can be determined based on a predetermined rule or a terminal capability (as recited in the above embodiments, which will not be repeated here), and the first indication information used to indicate the first synchronous transmission group can be fed back; if it meets the condition, the first indication information used to indicate the first synchronous transmission group can be fed back (wherein the first synchronous transmission group is the same as the second synchronous transmission group), or only a confirmation indication can be fed back to notify the first terminal to confirm the second synchronous transmission group it requested, etc., and the embodiments of the present disclosure are not limited thereto.

For another example, the first terminal or the network function entity may carry in the first request message the second indication information for indicating the synchronous transmission group to be joined and the second terminal that performs synchronous transmission, so as to request the second terminal to join the synchronous transmission group, such as the second indication information may be the identification information of the second synchronous transmission group and/or the level information of the second synchronous transmission group, and the identification information of the second terminal. Specifically, the core network side determines the first synchronous transmission group based on the second indication information, which can refer to the above embodiments or their combinations, and will not be elaborated further herein.

Optionally, the first request message carries processing capability information of the first terminal and/or transmission delay information, and/or the second request message carries processing capability information of the first terminal and/or transmission delay information;
after determining, by the first core network element, the first synchronous transmission group based on the request message, the method further includes:
establishing, by the first core network element, a synchronous transmission policy corresponding to the first synchronous transmission group based on the transmission delay information and/or the processing capability information; or
sending, by the first core network element, a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

For example, the processing capability information may be a processor model (CPU/GPU), a memory model, or information measuring processing capability such as a main frequency/number of cores/a memory size, etc. The transmission delay information may include but is not limited to: terminal processing delay, air interface delay, etc.; the embodiments of the present disclosure are not limited thereto.

In the embodiments, when the first terminal initiates a request to establish a synchronous transmission group, it can carry transmission delay information and/or processing capability information of the first terminal, so that for the core network side, it can determine the synchronous transmission policy corresponding to the first synchronous transmission group when determining the first synchronous transmission group to which the first terminal belongs based on the request to establish a synchronous transmission group; wherein the synchronous transmission policy is a policy at the core network side that enables multiple terminals corresponding to the synchronous transmission group to synchronously receive data and/or synchronously complete the processing of the data.

Optionally, the first core network element can be a newly added core network element, and the first core network element can establish the synchronous transmission policy corresponding to the first synchronous transmission group based on the transmission delay information and/or processing capability information. Alternatively, the first core network element can be an AMF or an SMF, and at this time, the AMF network element or the SMF network element can establish a synchronous transmission policy to the second core network element, that is, the AMF network element or the SMF network element sends a request message to establish a synchronous transmission policy to the second core network element, so as to request to establish the synchronous transmission policy corresponding to the first synchronous transmission group to the second core network element. The second core network element can be a PCF network element or a newly added core network element.

Optionally, the first core network element or a third core network element is pre-configured with a list that includes multiple synchronous transmission groups supported by the terminal and/or synchronous transmission capability information supported by the network;
determining, by the first core network element, the first synchronous transmission group based on the request message, including:
determining, by the first core network element, the first synchronous transmission group based on the list and the request message.

The first core network element can be a newly added core network element, which can be pre-configured with a list that includes multiple synchronous transmission groups supported by the terminal and/or synchronous transmission capability information supported by the network; or, the first core network element may be an AMF element or an SMF element, which can be pre-configured with a list that includes multiple synchronous transmission groups supported by the terminal and/or synchronous transmission capability information supported by the network through a third core network element. The third core network element may be a newly added core network element or a Unified Data Management (UDM) element.

For example, in the case that the first core network element is pre-configured with a list of multiple synchronous transmission groups supported by the terminal, the first core network may determine the synchronous transmission group that includes the first terminal based on the pre-configured list that includes multiple synchronous transmission groups; or, in the case that none of the synchronous transmission groups in the pre-configured list includes the first terminal, based on a predetermined rule or the terminal capability, it may add the synchronous transmission group that includes the first terminal to the list, or add the first terminal to an existing synchronous transmission group, etc. For details, it may refer to the above embodiments, which will not be repeated herein.

For another example, in the case that a third core network element is pre-configured with a list that includes multiple synchronous transmission groups supported by the terminal, the first core network can query the list that includes multiple synchronous transmission groups pre-configured by the third core network element to determine the synchronous transmission group to which the first terminal belongs. For details, it may refer to the above embodiments, which will not be repeated herein.

Optionally, after the first core network element sends the first indication information, the method also includes:
the first core network element receives a first response message, and the first response message carries confirmation information of the terminal confirming the first synchronous transmission group.

For example, the first terminal sends a first response message to the base station, and the base station directly or indirectly forwards the first response message to the first core network element to notify the first core network element that the first indication information has been received and/or the first synchronous transmission group has been confirmed.

It should be noted that the first core network element may send the first indication information to multiple terminals through the base station without any time sequence; or, in the case that the first terminal requests to establish a synchronous transmission group (which may be initiated by the first terminal or the network side) and the second terminal is a member of the synchronous transmission group, the first core network element may first send the first indication information to the first terminal through the base station. Upon receiving the first response message fed back by the first terminal through the base station, the first core network element may then send the first indication information to the second terminal through the base station, and receive the second response message fed back by the second terminal through the base station. The second response message carries confirmation information of the second terminal confirming the first synchronous transmission group.

The network device involved in the embodiments of the present disclosure may be a base station, and the base station may include multiple cells that provide services to the terminal. Depending on the specific application, a base station can also be called an access point, or it can be a device in the access network that communicates with the wireless terminal device through one or more sectors on the air interface, or it can be named by another name. A network device can be used to exchange received air frames with Internet Protocol (IP) packets and act as a router between the wireless terminal device and the rest of the access network, wherein the rest of the access network can include the IP communications network. The network device may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present disclosure. In some network structures, the network device may include Centralized Unit (CU) node and Distributed Unit (DU) nodes, and the centralized unit and the distributed units may also be arranged geographically separately.

The following describes a method for determining a synchronous transmission group for interaction between a terminal and a core network element in an embodiment of the present disclosure in conjunction with a specific embodiment.

Embodiment 1: a terminal initiates an establishment of a synchronous transmission group.

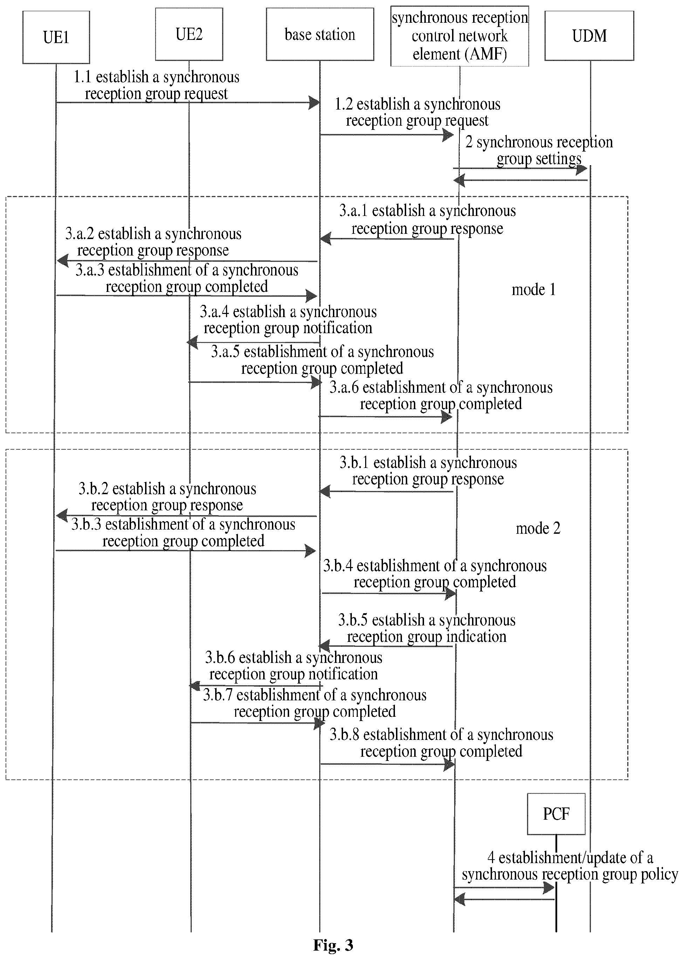

As shown in Fig. 3, taking downlink reception as an example, a synchronous transmission group in the embodiment of the present disclosure can be called a synchronous reception group. A specific flowchart of a terminal initiating an establishment of the synchronous transmission group includes the following steps.

Step 1.1: a UE1 sends a request to the base station to establish the synchronous reception group, and the request includes second synchronous reception group information and a synchronous reception terminal ID. The second synchronous reception group information includes information such as a synchronous reception group identifier and/or a synchronous reception group level; the synchronous reception terminal ID may be an ID that identifies a user in the network, such as the SUPI, the SUCI, etc., which is used to identify the ID of the terminal within a group.

Step 1.2: the base station sends the request to establish the synchronous reception group to a synchronous reception control network element, such as an AMF.

Step 2: the AMF updates UE information to a UDM, including the information of the UE1 and the information of other UEs within the synchronous reception group, and the updated information includes the second synchronous reception group information, etc.

Mode 1-Step 3.a.1: the AMF returns a synchronous reception group response message to the base station, including identification information of a first synchronous reception group and the terminal ID within the group; wherein, the first synchronous reception group and a second synchronous reception group may be the same or different, and the terminal corresponding to the first synchronous reception group and the terminal corresponding to the second synchronous reception group may be the same or different.

Step 3.a.2 and Step 3.a.4: the base station sends a synchronous reception group establishment response message and a synchronous reception group establishment notification message to the UE1 and the UE2 within the group respectively, and the message includes first synchronous reception group information.

Step 3.a.3 and Step 3.a.5: each of the UE1 and UE2 feeds back a synchronous reception group establishment completion response message to the base station, including a first synchronous reception group identifier, a completion identifier, a terminal identifier, etc.

Step 3.a.6: the base station sends a synchronous reception group establishment completion response message to the AMF, including the first synchronous reception group identifier, the completion identifier, the terminal identifier, etc.

The difference between Mode 2 and Mode 1 is that the occasions of sending the synchronous reception notification message for multiple terminals within the group are different. In Mode 2, after receiving the synchronous reception group establishment completion response message fed back by the UE1, the synchronous reception group establishment notification message is sent to the UE2. The AMF sends an establishment response to the initiator UE1 through the base station and sends an indication of establishing a synchronous reception group to other users within the group.

Step 4: the AMF establishes/updates a synchronous reception group policy to a PCF.

It should be noted that the above process can be used as a separate implementation process or reused in other processes, such as service request process, etc., and the embodiments of the present disclosure are not limited thereto.

Embodiment 2: a network initiates an establishment of a synchronous transmission group.

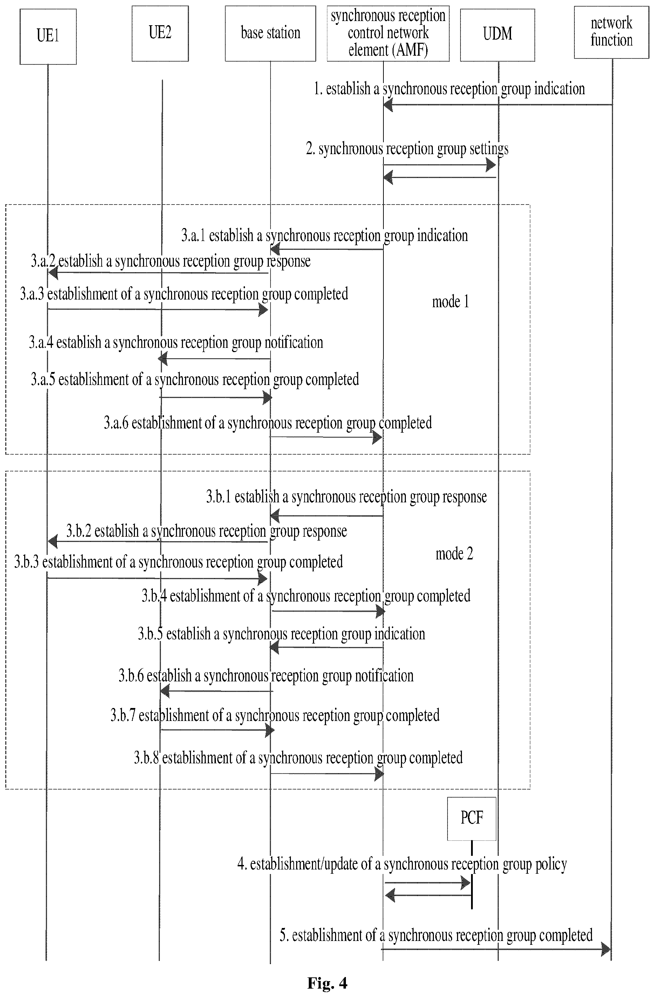

As shown in Fig. 4, taking downlink reception as an example, a synchronous transmission group in the embodiments of the present disclosure can be called a synchronous reception group. A specific flowchart of a terminal initiating the establishment of the synchronous transmission group includes the following steps.

Step 1: a network function entity (such as a PCF or a network management plane function entity) sends a request to establish the synchronous reception group to a synchronous reception control network element, such as an AMF, and the request includes second synchronous reception group information and a synchronous reception terminal ID. The second synchronous reception group information includes information such as a synchronous reception group identifier and/or a synchronous reception group level; the synchronous reception terminal ID may be an ID that identifies a user in the network, such as the SUPI, the SUCI, etc., which is used to identify the ID of the terminal within a group.

Step 2: the AMF updates UE information to a UDM, including the information of the UE1 and the information of other UEs within the synchronous reception group, and the updated information includes the second synchronous reception group information, etc.

Mode 1-Step 3.a.1: the AMF returns a synchronous reception group response message to the base station, including identification information of a first synchronous reception group and the terminal ID within the group; wherein, the first synchronous reception group and a second synchronous reception group may be the same or different, and the terminal corresponding to the first synchronous reception group and the terminal corresponding to the second synchronous reception group may be the same or different.

Step 3.a.2 and Step 3.a.4: the base station sends a synchronous reception group establishment response message and a synchronous reception group establishment notification message to the UE1 and the UE2 within the group respectively, and the message includes the first synchronous reception group information.

Step 3.a.3 and Step 3.a.5: each of the UE1 and UE2 feeds back a synchronous reception group establishment completion response message to the base station, including a first synchronous reception group identifier, a completion identifier, a terminal identifier, etc.

Step 3.a.6: the base station sends a synchronous reception group establishment completion response message to the AMF, including the first synchronous reception group identifier, the completion identifier, the terminal identifier, etc.

The difference between Mode 2 and Mode 1 is that the occasions of sending the synchronous reception notification message for multiple terminals within the group are different. In Mode 2, after receiving the synchronous reception group establishment completion response message fed back by the UE1, the synchronous reception group establishment notification message is sent to the UE2. The AMF sends an establishment response to the initiator UE1 through the base station and sends an indication of establishing a synchronous reception group to other users within the group.

Step 4: the AMF establishes/updates a synchronous reception group policy to the PCF.

Step 5: the AMF feeds back a synchronous reception group establishment completion response to the network function entity.

It should be noted that the above process can be used as a separate implementation process or reused in other processes, such as service request process, etc., and the embodiments of the present disclosure are not limited thereto.

Embodiment 3: it establishes a synchronous transmission group based on a registration process.

Specifically, a first terminal sends a registration request message, the registration request message carries second indication information; wherein the second indication information is used to indicate a second synchronous transmission group and/or a second terminal that performs synchronous transmission; a first core network element receives the registration request message, the registration request message carries the second indication information; wherein the second indication information is used to indicate the second synchronous transmission group and/or the second terminal that performs synchronous transmission; the first core network element sends a registration acceptance response message; the first terminal receives the registration acceptance response message, the registration acceptance response message carries first indication information.

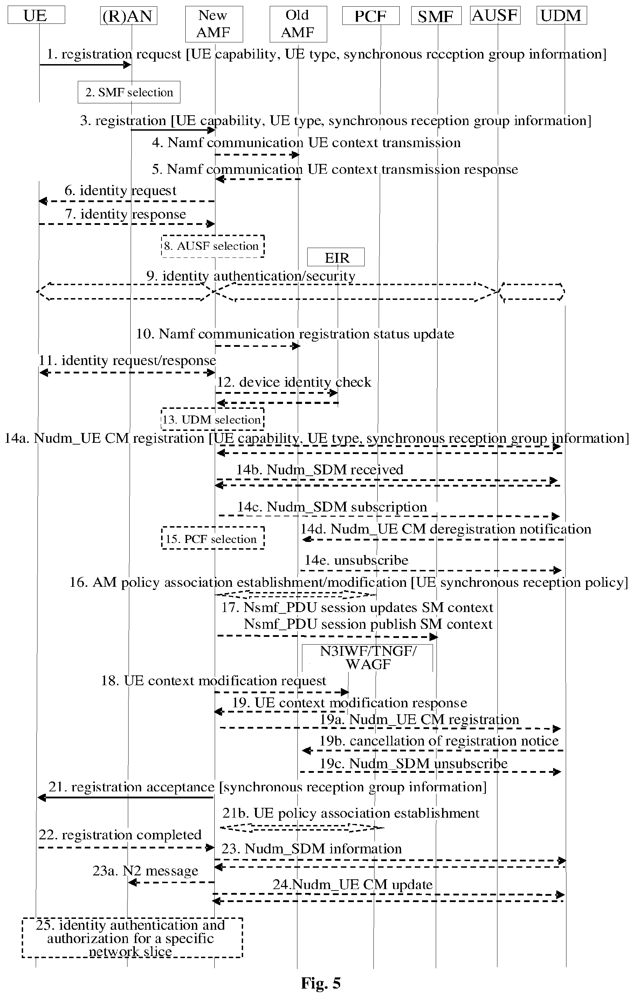

As shown in Fig. 5, taking downlink reception as an example, a synchronous transmission group in the embodiment of the present disclosure can be called a synchronous reception group, and a process of establishing the synchronous transmission group based on a registration process includes the following steps.

During the registration process, a UE reports a UE type, a UE capability, and first synchronous reception group information, as shown in step 1 and step 3 in Fig. 5.

The UE type includes, but is not limited to, at least one of a robot terminal, an Internet of Things (IOT) terminal, or a handheld mobile terminal, etc.

The UE capability includes but is not limited to: UE processing capability information, which may be a processor model (CPU/GPU), a memory model, or information measuring processing capability such as a main frequency/number of cores/a memory size, etc.

Synchronous reception group information includes, but is not limited to, at least one of a synchronous reception group identifier or a synchronous reception group level, etc.

After receiving the UE capability and the synchronous reception group information, an AMF queries the UDM to determine the synchronous reception group identifier that supports the UE, as shown in step 14a in Fig. 5.

It then establishes or updates a synchronous reception policy to a PCF, as shown in step 16 in Fig. 5.

Next, the AMF sends second synchronous reception group information to the UE, as shown in step 21 in Fig. 5.

The AMF sends the determined synchronous reception group ID to the UE to complete an establishment of a synchronous user group.

It should be noted that the first synchronous reception group information is contracted synchronous reception group information, or requested synchronous reception group information, which may be multiple; after receiving it, the AMF may determine the second synchronous reception group information to be used based on a network configuration and the information reported by other users within the group.

Embodiment 4: it establishes a synchronous transmission group based on a session process.

Specifically, a first terminal sends a session establishment request message, and the session establishment request message carries second indication information; wherein the second indication information is used to indicate a second synchronous transmission group and/or a second terminal that performs synchronous transmission; a first core network element receives the session establishment request message, and the session establishment request message carries the second indication information; wherein the second indication information is used to indicate the second synchronous transmission group and/or the second terminal that performs synchronous transmission; the first core network element sends a session establishment acceptance response message; the terminal receives the session establishment acceptance response message, and the session establishment acceptance response message carries first indication information.

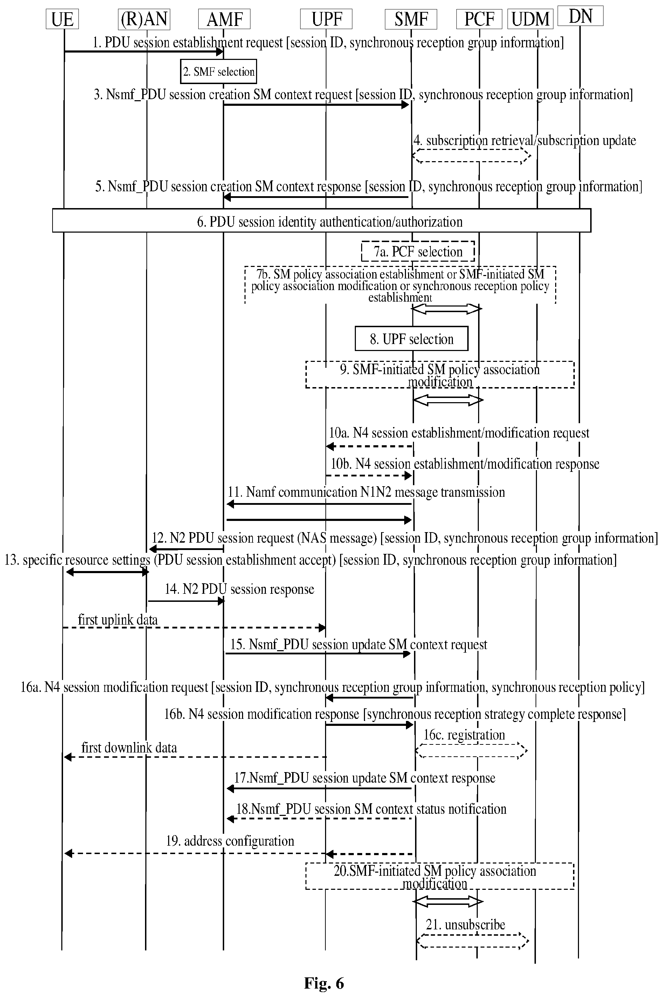

As shown in Fig. 6, taking downlink reception as an example, a synchronous transmission group in the embodiment of the present disclosure can be called a synchronous reception group, and a process of establishing the synchronous transmission group based on a registration process includes the following steps.

When a UE initiates a session establishment, it carries second synchronous reception group information corresponding to a session ID in a session establishment request sent to an AMF. The second synchronous reception group information includes information such as a synchronous reception group identifier and/or a synchronous reception group level.

The AMF forwards the second synchronous reception group information corresponding to the session ID to an SMF.

The SMF determines first synchronous reception group information supporting the UE based on the second synchronous reception group information.

The SMF establishes/updates a synchronous reception policy to a PCF, including synchronous reception group information, the synchronous reception policy, etc.

The SMF informs the UE through the AMF of the successfully established session ID and the synchronous reception group information corresponding to the session ID.

The SMF sends the session ID of the session, the synchronous reception group information corresponding to the session ID, and the synchronous reception policy of the session to the UPF.

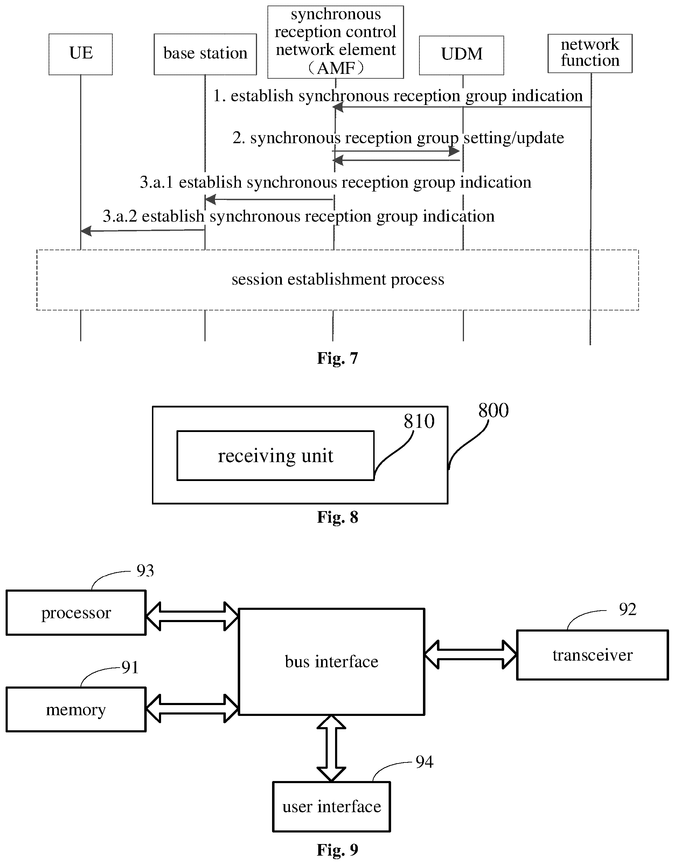

As shown in Fig. 7, taking downlink reception as an example, a synchronous transmission group in the embodiment of the present disclosure can be called a synchronous reception group, and a process of establishing a synchronous transmission group based on a registration process may further include the following steps.

A synchronous reception group establishment request initiated by a network function entity can be initiated by the PCF, or a network element such as a network management plane function. Specifically, the establishment of the synchronous reception group indication sent by the network function entity to the AMF includes the second synchronous reception group information, synchronous reception group user group information, such as a UE ID list, etc.

The AMF sets/updates the UDM based on the received indication information, determines first synchronous reception group information, and sends an indication to a terminal in a first synchronous reception group through a base station, so that the UE can initiate the session establishment process shown in Fig. 6, which will not be elaborated further herein.

The above provide an introduction to the method for determining a synchronous transmission group disclosed herein. The following embodiments will further illustrate a corresponding terminal and a network device in conjunction with the accompanying drawings.

Specifically, as shown in Fig. 8, a terminal 800 according to an embodiment of the present disclosure is a first terminal, including:
a receiving unit 810, configured to receive first indication information, wherein the first indication information is used to indicate a first synchronous transmission group to which the first terminal belongs;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the terminal 800 further includes:
a first sending unit, configured to send a first request message, wherein the first request message is used to request the first core network element to determine the first synchronous transmission group.

Optionally, the first request message carries second indication information;
wherein the second indication information is used to indicate a second synchronous transmission group and/or a second terminal that performs synchronous transmission; the first synchronous transmission group is determined by the first core network element based on the second indication information.

Optionally, the second indication information includes at least one of the followings:
identification information of the second synchronous transmission group;
level information of the second synchronous transmission group; or
identification information of the second terminal.

Optionally, the first terminal is pre-configured with a list that includes multiple synchronous transmission groups.

Optionally, the first request message carries transmission delay information and/or processing capability information of the first terminal.

Optionally, the terminal 800 further includes:
a second sending unit, configured to send a first response message, wherein the first response message carries confirmation information of the first synchronous transmission group.

It should be noted herein that the above-mentioned terminal provided by the embodiments of the present disclosure can implement all the method steps implemented in the embodiments of the method for determining the synchronous transmission group at the terminal side, and can achieve the same technical effect. The parts and beneficial effects of the embodiments that are the same as the method embodiments will no longer be described in detail.

In order to better achieve the above purpose, as shown in Fig. 9, the embodiments provide a terminal, the terminal being a first terminal, including a memory 91, a transceiver 92, and a processor 93; wherein the memory 91 is configured to store a computer program; the transceiver 92 is configured to receive and send data under the control of the processor 93; the processor 93 is configured to read the computer program in the memory 91 and perform the following operation:
receiving first indication information, wherein the first indication information is used to indicate a first synchronous transmission group to which the first terminal belongs;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the processor 93 is configured to read the computer program in the memory 91 and perform the following operation:
sending a first request message, wherein the first request message is used to request a first core network element to determine the first synchronous transmission group.

Optionally, the first request message carries second indication information;
wherein the second indication information is used to indicate a second synchronous transmission group and/or a second terminal that performs synchronous transmission; the first synchronous transmission group is determined by the first core network element based on the second indication information.

Optionally, the second indication information includes at least one of the followings:
identification information of the second synchronous transmission group;
level information of the second synchronous transmission group; or
identification information of the second terminal.

Optionally, the first terminal is pre-configured with a list that includes multiple synchronous transmission groups.

Optionally, the first request message carries transmission delay information and/or processing capability information of the first terminal.

Optionally, the processor 93 is configured to read the computer program in the memory 91 and perform the following operation:
sending a first response message, wherein the first response message carries confirmation information of the first synchronous transmission group.

In Fig. 9, the bus architecture may include any number of interconnected buses and bridges, and connects various circuits including one or more processors represented by the processor 93 and the memory represented by the memory 91. The bus architecture can also link together various other circuits such as peripherals, voltage regulators, and power management circuits, which are all well known in the art and therefore will not be described further herein. The bus interface provides the interface. The transceiver 92 may be a plurality of elements, including a transmitter and a receiver, to allow for communication with various other apparatuses on the transmission medium. The transmission medium includes wireless channels, wired channels, optical cables, and other transmission media. For different user equipments, the user interface 94 can also be an interface capable of externally or internally connecting a required device. The connected device includes but is not limited to a keypad, a display, a speaker, a microphone, a joystick, etc.

The processor 93 is responsible for managing the bus architecture and general processing, and the memory 91 can store data used by the processor 93 when performing operations.

Optionally, the processor 93 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

It should be noted herein that the above-mentioned terminal provided by the embodiments of the present disclosure can implement all the method steps implemented in the embodiment of the method for determining the synchronous transmission group at the terminal side, and can achieve the same technical effect. The parts and beneficial effects of the embodiments that are the same as the method embodiments will no longer be described in detail.

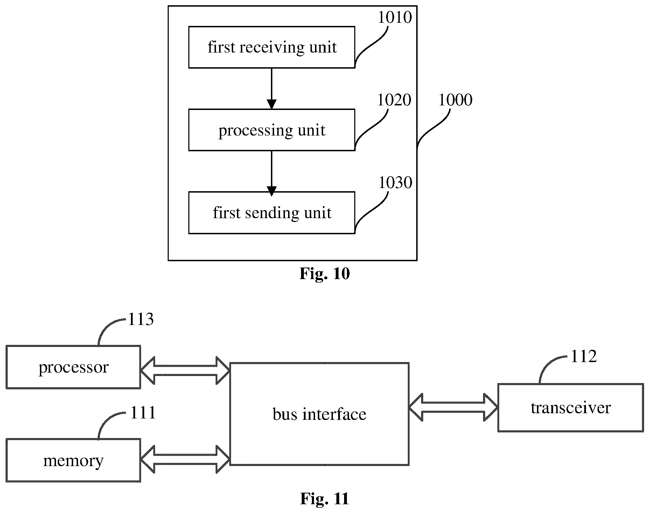

As shown in Fig. 10, the embodiments of the present disclosure provide a core network element 1000, which is a first core network element, including:
a first receiving unit 1010, configured to receive a request message;
a processing unit 1020, configured to determine a first synchronous transmission group based on the request message;
a first sending unit 1030, configured to send first indication information, the first indication information being used to indicate the first synchronous transmission group;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the first receiving unit 1010 is further configured to:
receive a first request message, the first request message being used for a first terminal to request the first core network element to determine the first synchronous transmission group to which the first terminal belongs; or
receive a second request message sent by a network function entity, the second request message being used to request the first core network element to determine the first synchronous transmission group.

Optionally, the first request message and/or the second request message carries second indication information; wherein the second indication information is used to indicate a second synchronous transmission group and/or a second terminal that performs synchronous transmission;
the processing unit 1020 is further configured to: determine the first synchronous transmission group based on the second indication information.

Optionally, the second indication information includes at least one of the followings:
identification information of the second synchronous transmission group;
level information of the second synchronous transmission group; or
identification information of the second terminal.

Optionally, the first request message carries processing capability information of the first terminal and/or transmission delay information, and/or the second request message carries processing capability information of the first terminal and/or transmission delay information;
the core network element 1000 further includes:
a first establishing unit, configured to establish a synchronous transmission policy corresponding to the first synchronous transmission group based on the transmission delay information and/or the processing capability information; or
a second sending unit, configured to send a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

Optionally, the first core network element or a third core network element is pre-configured with a list that includes multiple synchronous transmission groups supported by the terminal, and/or synchronous transmission capability information supported by the network;
the processing unit 1020 is further configured to: determine the first synchronous transmission group based on the list and the request message.

Optionally, the core network element 1000 further includes:
a second receiving unit, configured to receive a first response message, wherein the first response message carries confirmation information of the terminal confirming the first synchronous transmission group.

It should be noted here that the above-mentioned core network element provided by the embodiments of the present disclosure can implement all the method steps implemented in the embodiment of the method for determining the synchronous transmission group at the core network element side, and can achieve the same technical effect. The parts and beneficial effects of the embodiments that are the same as the method embodiments will no longer be described in detail.

In order to better achieve the above purpose, as shown in Fig. 11, a core network element is provided, the core network element being a first core network element, including a memory 111, a transceiver 112, and a processor 113; wherein the memory 111 is configured to store a computer program; the transceiver 112 is configured to receive and send data under the control of the processor 113; the processor 113 is configured to read the computer program in the memory 111 and perform the following operations:
receiving a request message;
determining a first synchronous transmission group based on the request message;
sending a first indication information, wherein the first indication information is used to indicate the first synchronous transmission group;
wherein multiple terminals corresponding to the first synchronous transmission group synchronously receive data and/or synchronously complete processing of the data.

Optionally, the first indication information includes at least one of the followings:
identification information of the first synchronous transmission group; or
level information of the first synchronous transmission group.

Optionally, the processor 113 is configured to read the computer program in the memory 111 and perform the following operations:
receiving a first request message, wherein the first request message is used for a first terminal to request the first core network element to determine the first synchronous transmission group to which the first terminal belongs; or
receiving a second request message sent by a network function entity, wherein the second request message is used to request the first core network element to determine the first synchronous transmission group.

Optionally, the first request message and/or the second request message carries second indication information; wherein the second indication information is used to indicate a second synchronous transmission group and/or a second terminal that performs synchronous transmission;
the processor 113 is configured to read the computer program in the memory 111 and perform the following operations:
determining the first synchronous transmission group based on the second indication information.

Optionally, the second indication information includes at least one of the followings:
identification information of the second synchronous transmission group;
level information of the second synchronous transmission group; or
identification information of the second terminal.

Optionally, the first request message carries processing capability information of the first terminal and/or transmission delay information, and/or the second request message carries processing capability information of the first terminal and/or transmission delay information;
the processor 113 is configured to read the computer program in the memory 111 and perform the following operations:
establishing a synchronous transmission policy corresponding to the first synchronous transmission group based on the transmission delay information and/or the processing capability information; or
sending a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

Optionally, the first core network element or the third core network element is pre-configured with a list that includes multiple synchronous transmission groups supported by the terminal, and/or synchronous transmission capability information supported by the network;
the processor 113 is configured to read the computer program in the memory 111 and perform the following operations:
determining the first synchronous transmission group based on the list and the request message.

Optionally, the processor 113 is configured to read the computer program in the memory 111 and perform the following operations:
receiving a first response message, wherein the first response message carries confirmation information of the terminal confirming the first synchronous transmission group.

In Fig. 11, the bus architecture may include any number of interconnected buses and bridges, and connects various circuits including one or more processors represented by the processor 113 and the memory represented by the memory 111. The bus architecture can also link together various other circuits such as peripherals, voltage regulators, and power management circuits, which are all well known in the art and therefore will not be described further herein. The bus interface provides the interface. The transceiver 112 may be a plurality of elements, including a transmitter and a receiver, to allow for communication with various other apparatuses on the transmission medium. The transmission medium includes wireless channels, wired channels, optical cables, and other transmission media. The processor 113 is responsible for managing the bus architecture and general processing, and the memory 111 can store data used by the processor 113 when performing operations.

The processor 113 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

It should be noted here that the above-mentioned core network element provided by the embodiments of the present disclosure can implement all the method steps implemented in the embodiment of the method for determining the synchronous transmission group at the core network element side, and can achieve the same technical effect. The parts and beneficial effects of the embodiments that are the same as the method embodiments will no longer be described in detail.

The embodiments of the present disclosure further provide a processor-readable storage medium. The processor-readable storage medium stores a computer program. The computer program is used to cause the processor to execute the steps of the method for determining the synchronous transmission group at the terminal side, or the computer program is used to cause the processor to execute the steps of the method for determining the synchronous transmission group at the core network element side, and can achieve the same technical effect. The parts and beneficial effects of the embodiments that are the same as the method embodiments will no longer be described in detail.

The processor-readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk or Solid State Drive (SSD)), etc.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in the flow diagram flow or flows and/or block diagram block or blocks.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above methods or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processors, DSPs), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of the present disclosure are adopted not to describe a specific sequence or order but to distinguish similar objects. It should be understood that data used like this may be interchanged under a proper condition for implementation of the embodiments of the present disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

In addition, it should be noted that in the apparatus and method of the present disclosure, obviously, each component or each step can be decomposed and/or recombined. These decompositions and/or recombinations should be considered as equivalents to the present disclosure. Furthermore, the steps for executing the above series of processes can naturally be executed in chronological order in the order described, but they do not necessarily need to be executed in the chronological order, and some steps may be executed in parallel or independently of each other. For those of ordinary skill in the art, it can be understood that all or any steps or components of the methods and apparatuses of the present disclosure can be implemented in any computing device (including processor, storage medium, etc.) or a network of computing devices in the form of hardware, firmware, software or their combination, which can be achieved by those of ordinary skill in the art using their basic programming skills after reading the description of the present disclosure.

Obviously, those skilled in the art can make various changes and modifications to the present disclosure without departing from the spirit and scope of the present disclosure. In this way, if these modifications and variations of the present disclosure fall within the scope of the claims of the present disclosure and equivalent thereof, the present disclosure is also intended to include these modifications and variations.

## Claims

1. A method for determining a synchronous transmission group, comprising:
receiving, by a first terminal, first indication information, wherein the first indication information is used to indicate a first synchronous transmission group to which the first terminal belongs;
wherein multiple terminals corresponding to the first synchronous transmission group synchronously receive data and/or synchronously complete processing of the data.

2. The method for determining the synchronous transmission group according to claim 1, wherein the first indication information comprises at least one of the followings:
identification information of the first synchronous transmission group; or
level information of the first synchronous transmission group.

3. The method for determining the synchronous transmission group according to claim 1, wherein before receiving, by the first terminal, the first indication information, the method further comprises:
sending, by the first terminal, a first request message, wherein the first request message is used to request a first core network element to determine the first synchronous transmission group.

4. The method for determining the synchronous transmission group according to claim 3, wherein the first request message carries second indication information;
wherein the second indication information is used to indicate a second synchronous transmission group and/or a second terminal that performs synchronous transmission; the first synchronous transmission group is determined by the first core network element based on the second indication information.

5. The method for determining the synchronous transmission group according to claim 4, wherein the second indication information comprises at least one of the followings:
identification information of the second synchronous transmission group;
level information of the second synchronous transmission group; or
identification information of the second terminal.

6. The method for determining the synchronous transmission group according to claim 4, wherein the first terminal is pre-configured with a list that comprises multiple synchronous transmission groups.

7. The method for determining the synchronous transmission group according to claim 3, wherein the first request message carries processing capability information of the first terminal and/or transmission delay information.

8. A method for determining a synchronous transmission group, comprising:
receiving, by a first core network element, a request message;
determining, by the first core network element, a first synchronous transmission group based on the request message;
sending, by the first core network element, first indication information, wherein the first indication information is used to indicate the first synchronous transmission group;
wherein multiple terminals corresponding to the first synchronous transmission group synchronously receive data and/or synchronously complete processing of the data.

9. The method for determining the synchronous transmission group according to claim 8, wherein the first indication information comprises at least one of the followings:
identification information of the first synchronous transmission group; or
level information of the first synchronous transmission group.

10. The method for determining the synchronous transmission group according to claim 8, wherein receiving, by the first core network element, the request message, comprising:
receiving, by the first core network element, a first request message, wherein the first request message is used for a first terminal to request the first core network element to determine the first synchronous transmission group to which the first terminal belongs; or
receiving, by the first core network element, a second request message sent by a network function entity, wherein the second request message is used to request the first core network element to determine the first synchronous transmission group.

11. The method for determining the synchronous transmission group according to claim 10, wherein the first request message and/or the second request message carries second indication information; wherein the second indication information is used to indicate a second synchronous transmission group and/or a second terminal that performs synchronous transmission;
determining, by the first core network element, the first synchronous transmission group based on the request message, comprising:
determining, by the first core network element, the first synchronous transmission group based on the second indication information.

12. The method for determining the synchronous transmission group according to claim 11, wherein the second indication information comprises at least one of the followings:
identification information of the second synchronous transmission group;
level information of the second synchronous transmission group; or
identification information of the second terminal.

13. The method for determining the synchronous transmission group according to claim 10, wherein the first request message carries processing capability information of the first terminal and/or transmission delay information, and/or the second request message carries processing capability information of the first terminal and/or transmission delay information;
after determining, by the first core network element, the first synchronous transmission group based on the request message, the method further comprises:
establishing, by the first core network element, a synchronous transmission policy corresponding to the first synchronous transmission group based on the transmission delay information and/or the processing capability information; or
sending, by the first core network element, a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

14. The method for determining the synchronous transmission group according to claim 8, wherein the first core network element or a third core network element is pre-configured with synchronous transmission capability information supported by a network and/or a list that comprises multiple synchronous transmission groups supported by the terminal;
determining, by the first core network element, the first synchronous transmission group based on the request message, comprising:
determining, by the first core network element, the first synchronous transmission group based on the list and the request message.

15. A terminal, the terminal being a first terminal, and comprising a memory, a transceiver, and a processor;
wherein the memory is configured to store a computer program; the transceiver is configured to receive and send data under the control of the processor; the processor is configured to read the computer program in the memory and perform the following operation:
receiving first indication information, wherein the first indication information is used to indicate a first synchronous transmission group to which the first terminal belongs;
wherein multiple terminals corresponding to the first synchronous transmission group synchronously receive data and/or synchronously complete processing of the data.

16. The terminal according to claim 15, wherein the first indication information comprises at least one of the followings:
identification information of the first synchronous transmission group; or
level information of the first synchronous transmission group.

17. The terminal according to claim 15, wherein the processor is configured to read the computer program in the memory and perform the following operation:
sending a first request message, wherein the first request message is used to request a first core network element to determine the first synchronous transmission group.

18. The terminal according to claim 17, wherein the first request message carries second indication information;
wherein the second indication information is used to indicate a second synchronous transmission group and/or a second terminal that performs synchronous transmission; the first synchronous transmission group is determined by the first core network element based on the second indication information.

19. The terminal according to claim 18, wherein the second indication information comprises at least one of the followings:
identification information of the second synchronous transmission group;
level information of the second synchronous transmission group; or
identification information of the second terminal.

20. The terminal according to claim 18, wherein the first terminal is pre-configured with a list that comprises multiple synchronous transmission groups.

21. The terminal according to claim 17, wherein the first request message carries processing capability information of the first terminal and/or transmission delay information.

22. A terminal, the terminal being a first terminal, comprising:
a receiving unit, configured to receive first indication information, wherein the first indication information is used to indicate a first synchronous transmission group to which the first terminal belongs;
wherein multiple terminals corresponding to the first synchronous transmission group synchronously receive data and/or synchronously complete processing of the data.

23. The terminal according to claim 22, wherein the first indication information comprises at least one of the followings:
identification information of the first synchronous transmission group; or
level information of the first synchronous transmission group.

24. The terminal according to claim 22, further comprising:
a first sending unit, configured to send a first request message, the first request message being used to request a first core network element to determine the first synchronous transmission group.

25. The terminal according to claim 24, wherein the first request message carries second indication information;
wherein the second indication information is used to indicate a second synchronous transmission group and/or a second terminal that performs synchronous transmission; the first synchronous transmission group is determined by the first core network element based on the second indication information.

26. The terminal according to claim 25, wherein the second indication information comprises at least one of the followings:
identification information of the second synchronous transmission group;
level information of the second synchronous transmission group; or
identification information of the second terminal.

27. The terminal according to claim 25, wherein the first terminal is pre-configured with a list that comprises multiple synchronous transmission groups.

28. The terminal according to claim 24, wherein the first request message carries processing capability information of the first terminal and/or transmission delay information.

29. A core network element, the core network element being a first core network element, and comprising a memory, a transceiver, and a processor;
wherein the memory is configured to store a computer program; the transceiver is configured to receive and send data under the control of the processor; the processor is configured to read the computer program in the memory and perform the following operation:
receiving a request message;
determining a first synchronous transmission group based on the request message;
sending a first indication information, the first indication information is used to indicate the first synchronous transmission group;
wherein multiple terminals corresponding to the first synchronous transmission group synchronously receive data and/or synchronously complete processing of the data.

30. The core network element according to claim 29, wherein the first indication information comprises at least one of the followings:
identification information of the first synchronous transmission group; or
level information of the first synchronous transmission group.

31. The core network element according to claim 29, wherein the processor is configured to read the computer program in the memory and perform the following operation:
receiving a first request message, the first request message is used for a first terminal to request the first core network element to determine the first synchronous transmission group to which the first terminal belongs; or
receiving a second request message sent by a network function entity, the second request message is used to request the first core network element to determine the first synchronous transmission group.

32. The core network element according to claim 31, wherein the first request message and/or the second request message carries second indication information; wherein the second indication information is used to indicate a second synchronous transmission group and/or a second terminal that performs synchronous transmission;
the processor is configured to read the computer program in the memory and perform the following operation:
determining the first synchronous transmission group based on the second indication information.

33. The core network element according to claim 32, wherein the second indication information comprises at least one of the followings:
identification information of the second synchronous transmission group;
level information of the second synchronous transmission group; or
identification information of the second terminal.

34. The core network element according to claim 31, wherein the first request message carries processing capability information of the first terminal and/or transmission delay information, and/or the second request message carries processing capability information of the first terminal and/or transmission delay information;
the processor is configured to read the computer program in the memory and perform the following operation:
establishing a synchronous transmission policy corresponding to the first synchronous transmission group based on the transmission delay information and/or the processing capability information; or
sending a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

35. The core network element according to claim 29, wherein the first core network element or a third core network element is pre-configured with the synchronous transmission capability information supported by a network and/or a list that comprises multiple synchronous transmission groups supported by the terminal;
the processor is configured to read the computer program in the memory and perform the following operation:
determining the first synchronous transmission group based on the list and the request message.

36. A core network element, the core network element being a first core network element, and comprising:
a first receiving unit, configured to receive a request message;
a processing unit, configured to determine a first synchronous transmission group based on the request message;
a first sending unit, configured to send first indication information, the first indication information being used to indicate the first synchronous transmission group;
wherein multiple terminals corresponding to the first synchronous transmission group synchronously receive data and/or synchronously complete processing of the data.

37. The core network element according to claim 36, wherein the first indication information comprises at least one of the followings:
identification information of the first synchronous transmission group; or
level information of the first synchronous transmission group.

38. The core network element according to claim 36, wherein the first receiving unit is further configured to:
receive a first request message, the first request message being used for a first terminal to request the first core network element to determine the first synchronous transmission group to which the first terminal belongs; or
receive a second request message sent by a network function entity, the second request message being used to request the first core network element to determine the first synchronous transmission group.

39. The core network element according to claim 38, wherein the first request message and/or the second request message carries second indication information; wherein the second indication information is used to indicate a second synchronous transmission group and/or a second terminal that performs synchronous transmission;
the processing unit is further configured to:
determine the first synchronous transmission group based on the second indication information.

40. The core network element according to claim 39, wherein the second indication information comprises at least one of the followings:
identification information of the second synchronous transmission group;
level information of the second synchronous transmission group; or
identification information of the second terminal.

41. The core network element according to claim 39, wherein the first request message carries processing capability information of the first terminal and/or transmission delay information, and/or the second request message carries processing capability information of the first terminal and/or transmission delay information;
the core network element further comprises:
a first establishing unit, configured to establish a synchronous transmission policy corresponding to the first synchronous transmission group based on the transmission delay information and/or the processing capability information; or
a second sending unit, configured to send a request message for establishing a synchronous transmission policy to a second core network element based on the transmission delay information and/or the processing capability information, wherein the request message for establishing the synchronous transmission policy is used to request the second core network element to establish the synchronous transmission policy corresponding to the first synchronous transmission group.

42. The core network element according to claim 36, wherein the first core network element or a third core network element is pre-configured with synchronous transmission capability information supported by a network and/or a list that comprises multiple synchronous transmission groups supported by the terminal;
the processing unit is further configured to:
determine the first synchronous transmission group based on the list and the request message.

43. A processor-readable storage medium storing a computer program, wherein the computer program is used to cause a processor to execute the steps of the method for determining a synchronous transmission group according to any one of claims 1 to 7, or the computer program is used to cause a processor to execute the steps of the method for determining a synchronous transmission group according to any one of claims 8 to 14.
